# EUROPEAN PATENT SPECIFICATION

(11) **EP 0 869 378 B1**
(45) Date of publication and mention of the grant of the patent: **03.10.2007**
(21) Application number: 98400395.4
(22) Date of filing: 19.02.1998
(51) Int. Cl.: G02B 6/38

(54) **Optical connector**
Optischer Stecker
Connecteur optique

(30) Priority: 20.02.1997 JP 3604697
(43) Date of publication of application: 07.10.1998
(73) Proprietor: Sumitomo Wiring Systems, Ltd., Yokkaichi City Mie 510 (JP)
(72) Inventor: Asada, Kazuhiro, 1-14 Nishisuehiro-cho Yokkaichi-ken, Mie (JP)
(74) Representative: Bertrand, Didier

(56) References cited:
- EP-A- 0 517 346
- DE-U- 9 010 357

## Description

The present invention relates to an optical connector. More particularly, the invention concerns an optical connector for connecting optical-fiber cables to each other, or for connecting an optical-fiber cable to an optical element.

An optical-fiber cable is classically formed by one or a plurality of optical fibers assembled together by a coating covering them.

Japanese utility models having publication numbers Sho 58-42811 (first prior art), Hei 2-29010 (second prior art) and Hei 5-59412 (third prior art) have already disclosed optical connectors for holding such an optical-fiber cable.

The optical connector according to the first prior art is provided with a ferrule, which comprises protrusions on its inner cylindrical surface proximal to the end connecting to the main frame. By tightening the ferrule, the optical-fiber cable is fixed to the connector.

The optical connector according to the second prior art has a pair of opposing side-walls that gradually enlarges towards an opening end. The internal surface of these side walls is provided with a plurality of undulating projections. The optical-fiber cable is passed through between the two side-walls and held by tightening them.

In the third prior art, a clamp is made of a thin metal sheet so as to form a channel having a U-shaped cross-section. The channel is then pushed onto the optical-fiber cable and cut into the cable coating, in order to hold the optical cable. In this case, the width of the U-channel is arranged to be slightly smaller than the diameter of the cable, whilst the side-walls of the U-shaped channel gradually enlarge from its closed end towards its open ends. When the optical cable is inserted into the U-shaped channel, the open ends are cut into the cable coating, and the U-shaped channel is then thrust onto the coating.

However, in the case of the first prior art, tightening the ferrule at the connecting side requires an excessively large force. Accordingly, the fitting operation takes time.

Further, in the case of the first and second prior arts, the optical-fiber cable is maintained in a compressed state, which induces deformation of the optical fibers themselves and causes high optical loss.

Alternatively, the optical loss can be reduced by decreasing the compressive force ; however, the gripping force exerted on the cable will then be also diminished.

Further still, in the case of the third prior art, the clamp is small and made of a thin metal sheet. Consequently, the connector cannot be mounted easily and the clamp may be deformed when mounting. Furthermore, as the open ends of the U-shaped channel are forcibly cut into the cable coating, the optical fibers are unavoidably distorted by compression.

EP0517346 discloses an optical connector comprising a housing, a cover, fixing means comprising a cable guide, a pair of stoppers having a cutting edge.

German utility model G 9010357 U1 discloses an optical connector comprising a housing, a cover, fixing means comprising a pair of guide plates and stoppers.

An object of the present invention is therefore to overcome the above-mentioned problems of the prior art and to provide an optical connector that can be easily assembled, securely fix an optical-fiber cable and minimize light losses.

To this end, there is provided an optical connector for fixing one or a plurality of optical-fiber cables, the cable comprising an optical fiber core and a coating having a tangential direction, said connector comprising :
a) a housing having a longitudinal direction along which the cables are arranged, and an elevational direction ;
b) a cover having the same directions as defined above ; and,
c) means for fixing the cable into the connector ;
the fixing means comprising :
- a cable guide for securely disposing each cable, the cable guide being provided on one of either the housing or the cover and extending along the longitudinal direction ;
- a pair of guide plates provided on the other of either the housing or the cover, the guide plates extending along the longitudinal and elevational directions and forming parallely opposing faces so as to flank the cable when the housing and the cover are mounted ; and,
- at least one stopper provided on the opposing face of each of the guide plates and extending along the elevational direction, the stopper having an open end with an innermost edge, seen from the pair of guide plates, which forms a cutting edge arranged to, when the housing and the cover are mounted, cut away part of the coating of the cable in the tangential direction thereof whereby the stopper securely holds the cable.

The innermost edge may have an angle of 50 to 90° with respect to the tangential direction of the cable coating.

The above-mentioned at least one stopper on each of the guide plates may form a plurality of pairs of stoppers facing each other at both sides of the optical-fiber cable and each pair may be provided along the longitudinal direction at a predetermined pitch.

The innermost edge of the stopper has preferably a length of not more than 1 mm along the longitudinal direction.

Preferably, the stopper has a substantially rectangular cross-section and an innermost face extending along the elevational direction. The face may be provided with a groove along the elevational direction.

The housing may have a front side and a rear side at each end of the longitudinal direction, the front side comprising one or a plurality of ferrules, and the rear side comprising a corresponding number of openings for inserting the optical-fiber cable.

Alternatively, the stopper may have a substantially rectangular cross-section and a face facing the front side, the face optionally being tapered towards the front side as it goes away from the guide plate.

As a preferred embodiment, the cable guide comprises a channel along the longitudinal direction for properly disposing the optical-fiber cable.

The above and other objects, features and advantages of the present invention will become apparent from the following description of the preferred embodiments, given as a non limiting example, with reference to the accompanying drawings in which :
- Fig. 1 shows a perspective view of a first embodiment of an optical connector according to the present invention, with a cover removed ;
- Fig. 2 shows a perspective view of the optical connector of Fig. 1, when it is turned over ;
- Fig. 3 shows a side view on the essential parts of the optical connector of Fig. 1, before they are assembled ;
- Fig. 4 shows the same essential parts as in Fig. 3, after they are assembled;
- Fig. 5 shows a top plan view on the longitudinal cross-section of the optical connector when it holds an optical-fiber cable ;
- Fig. 6 shows a side cross-sectional view of a pair of guide plates with a respective stopper in the optical connector according to a second embodiment ;
- Fig. 7 shows a perspective view of the optical connector according to a third embodiment, with a cover removed ;
- Fig. 8 shows a top plan view on the longitudinal cross-section of the essential parts of the optical connector of Fig. 7, when it holds an optical-fiber cable ;
- Fig. 9 shows a top plan view on the longitudinal cross-section of the essential parts of the optical connector according to a fourth embodiment ;
- Fig. 10 shows a top plan view on the longitudinal cross-section of the essential parts of the optical connector according to a fifth embodiment.

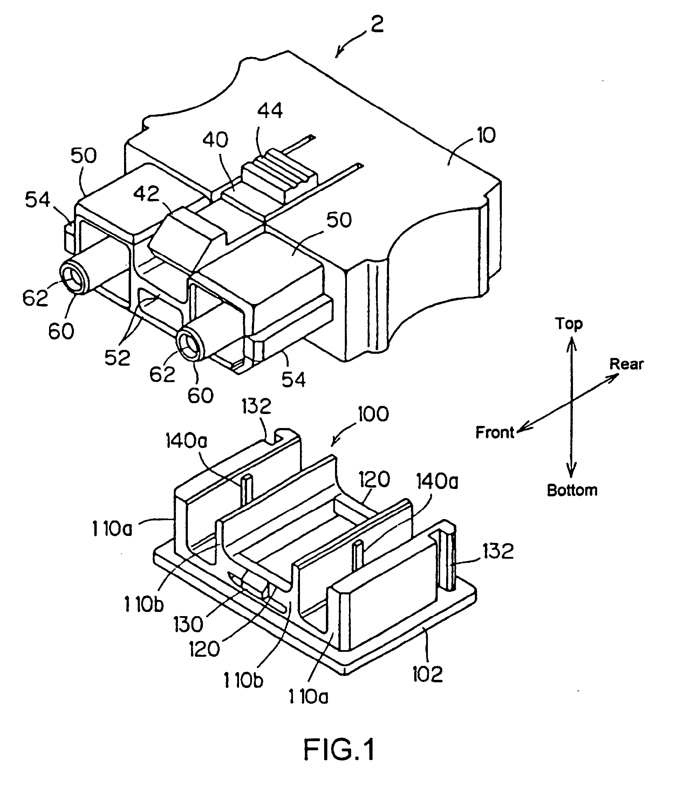

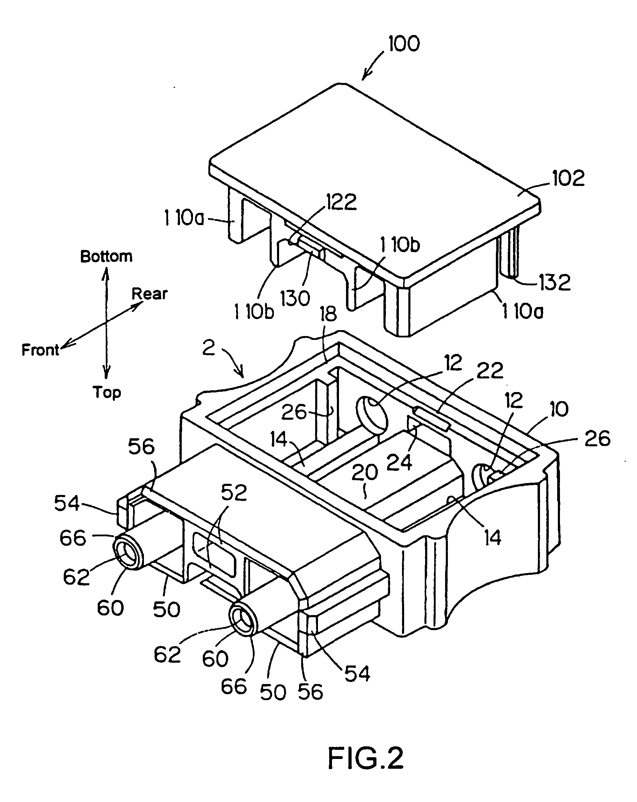

A first embodiment of the present invention is described with reference to Figs. 1 and 2.

In this embodiment, the optical connector comprises a housing 2 providing a housing space therein and a cover 100.

The housing 2 comprises a casing portion 10 having an open bottom (in Fig. 1). The front face of the casing portion 10 is provided with a pair of parallel tube portions 50 that project frontwards with a predetermined distance therebetween. The tube portions 50 are linked to each other via a linking element 52 provided between them. Each tube portion 50 is also provided with a guiding rib 54 on its outer face, opposed to the face where the linking element 52 is installed.

A ferrule 60 is provided inside each tube 50 for receiving and holding a respective optical-fiber cable. Each ferrule 60 has a cylindrical shape with a cable path 62 which connects to the housing space of the housing 2.

The outer rim zones of the tube portions 50 and the ferrules 60 are tapered frontwards so as to form a bevelled surface 56, 66. This configuration enables the connector to be easily connected to a corresponding socket of another connector (not shown in the figures).

The upper face of the casing portion 10 is cut out to form a plate 40 which extends from the centre part of the upper surface towards the upper part of the tube portions 50. The plate 40 has a first, innermost, end that is integrated with the upper face of the casing portion 10. The sides of the plate 40 that are adjacent to the upper face are defined by respective cutouts in the latter. The plate 40 can thus be flexed about its first end, perpendicularly to its general plane. A central portion of the plate 40 is provided with a finger grip 44 for applying a flexing force.

The second, outermost, end of the plate 40 projects beyond the upper surface of the casing portion 10 up to the projected end of the tube portions 50, and is equipped with a locking claw 42.

When the tube portions 50 and the ferrules 60 are connected to a receiving optical connector, the above-mentioned locking claw 42 is coupled to a corresponding locking recess (not shown in the figures). The locking claw 42 can be released therefrom by pushing down the finger grip 44, whereby the inserted optical connector is withdrawn from the receiving optical connector.

Two openings 12 for inserting the optical-fiber cables are provided in the rear wall of the casing portion 10, at a position corresponding to the cable paths 62 in the front wall.

A dividing step 20 separates the housing space into a right and a left compartments and each of them is provided with a cable guide 14 extending from the opening 12 to the cable path 62.

Each cable guide 14 is provided with a U-shaped channel along the upper surface thereof, along which the optical-fiber cable is guided through from the opening 12 into the cable path 62.

The end of the optical cable is initially stripped of the coating. This stripped end part is then inserted into the ferrules 60.

The open side of the casing portion 10 (bottom side in Fig. 1 and upper side in Fig. 2) is provided with a horizontal step 18 on its peripheral inner rim. This step contains an inwardly-slanting face 22 in the middle of the front rim and of the rear rim, respectively. Correspondingly, the cover 100 is provided with a locking tab 130 fitting into a locking recess 24.

Guiding ribs 26 are further provided on the inner face of the right and the left side-walls defining the housing space of the casing portion 10.

The cover 100 comprises a plate 102 which closes the space of the housing 2. The plate 102 is provided with a pair of guide plates 110a, 110b at the right and the left compartments respectively, in a direction perpendicular to the general plane of the plate 102.

The guide plates 110a, located outermost in a lateral direction of the cover, have an outermost face equipped with a guiding slot 132. This slot 132 has a shape complementary to that of the guiding rib 26. The guide plates 110b, located innermost, are linked to each other with a bridging element 120 near the front and rear sides. The middle of each bridging element 120 is provided with a locking tab 130 for fitting into a complementary-shaped locking recess 24.

When placing the cover 100 onto the open side of the housing 2, the guiding ribs 26 are first inserted into the guiding slots 132. Then, the locking tab 130 slides down along the slanting face 22 and mates with the complementary-shaped locking recess 24.

The covering plate 102 is then positioned on the horizontal step 18, whereby cover 100 is securely fitted to the housing 2.

The pair of guide plates 110a, 110b is positioned so as to flank the optical cable arranged on the cable guides 14. For this reason, the distance between the guide plates 110a, 110b is designed to be slightly larger than the diameter of the optical-fiber cable.

Further, as shown in Figs. 1, 3 and 4, the inner faces of the guide plates 110a, 110b, facing to each other, are provided with a pair of stoppers 140a, 140b.

Each stopper 140a, 140b has an elongate shape having a rectangular cross-section. Their inwardly-facing, outermost corner has a sharp rectangular edge 142a, 142b extending in a direction parallel to the axis of the optical-fiber cable A. This edge serves as a cutting blade. The distance between these two stoppers 140a, 140b is slightly less than the diameter of the cable A.

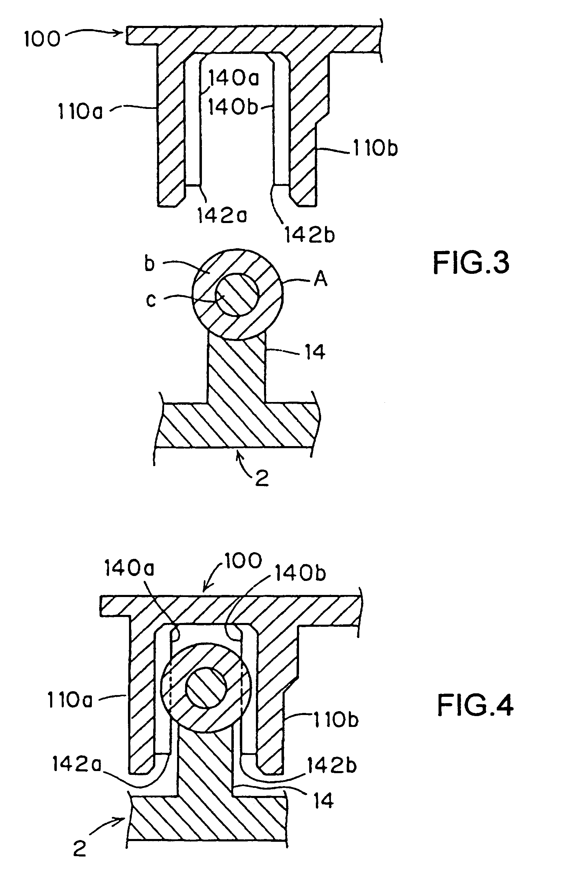

Figs. 3 to 5 show the procedure of fixing the optical-fiber cable into the connector.

As shown in Fig. 3, the optical-fiber cable is inserted into a predetermined position inside the housing 2 and installed on the cable guide 14. The cover 100 is then pushed onto the housing 2 towards its housing space.

Then, the sharp edges 142a, 142b come into contact with an upper circular surface of the coating b of cable A in a skewed position. With a further push, the edges cut into the coating b, in the manner of a flat chisel, and continue their downward movement. Then, the locking tabs 130 are fitted with the locking recesses 24 and the cover 100 is securely mounted on the housing 2.

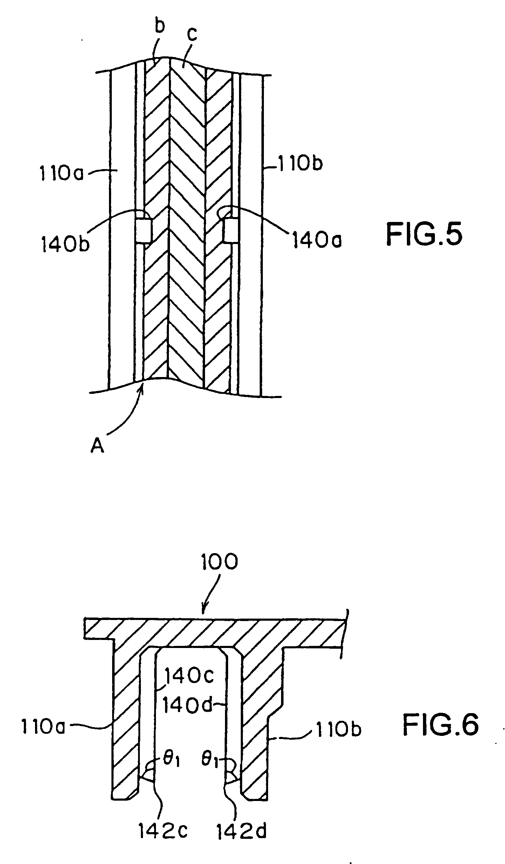

As shown in Figs. 4 and 5, the stoppers 140a, 140b are settled inside those parts of the coating b cut away by the sharp edges 142a, 142b. The stoppers thus hold the optical-fiber cable A by maintaining it therebetween.

In this optical connector, the optical fibers c are not compressed, neither during the press fitting of the cover 100, nor in their maintained position where the fibers are sandwiched between the two stoppers 140a, 140b. As the stoppers 140a, 140b do not exert undesirable thrusting force towards the optical fibers c, the latter receives little deformation and the optical loss is reduced to the minimum.

In this construction, when the cover 100 is fitted onto the housing 2, the optical-fiber cable A is fixedly held at the same time by the same one operation. Mounting of the optical connector thus becomes very easy.

Further, the formation of the U-shaped channel on the cable guide 14 enables to maintain the cable A in a precise longitudinal position without sideways drift. Accordingly, the cable A can be precisely positioned between the guide plates 110a, 110b.

Further, when the cover 100 is placed on the housing 2, a certain degree of pushing force is required. In order to reduce this force, the width of the stoppers 140a, 140b is devised to be less than 2 mm, preferably less than 1 mm. Thus, the resistance to the sharp edge 142a, 142b, when the coating b is cut, is reduced.

Further, to ensure a smooth cutting operation, the edge 142a, 142b may have a slant angle θ₁ of less than 100°. According to another embodiment of the present invention, shown in Fig. 6, the slant angle θ₁ is preferably comprised between 50° and 90°.

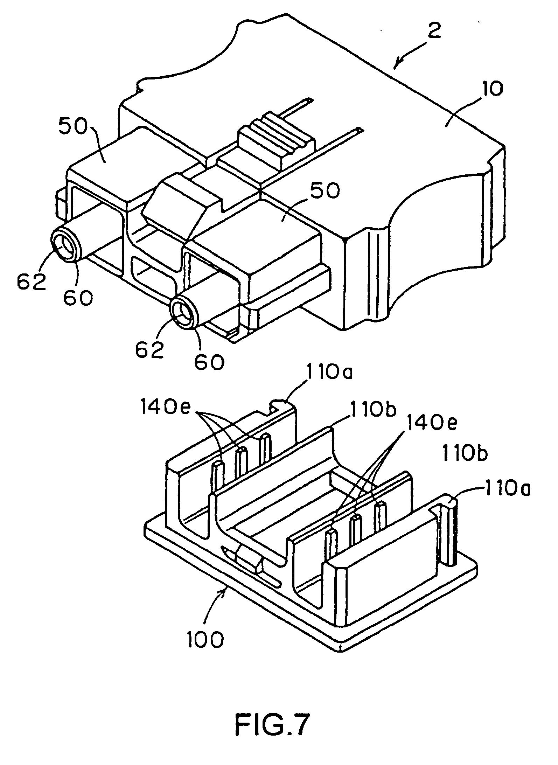

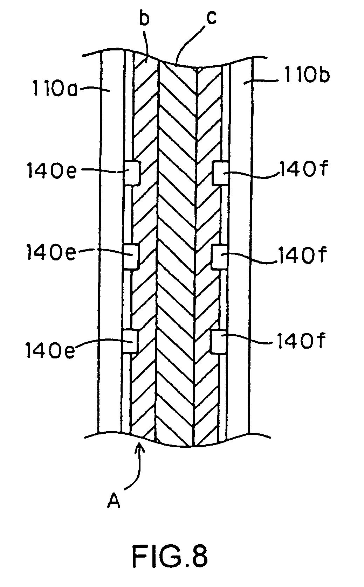

According to still another embodiment, shown in Fig. 7 and 8, a plurality of pairs of stoppers 140e, 140f are installed at a predetermined interval along the axis of the cable A. The cable is then retained more forcefully.

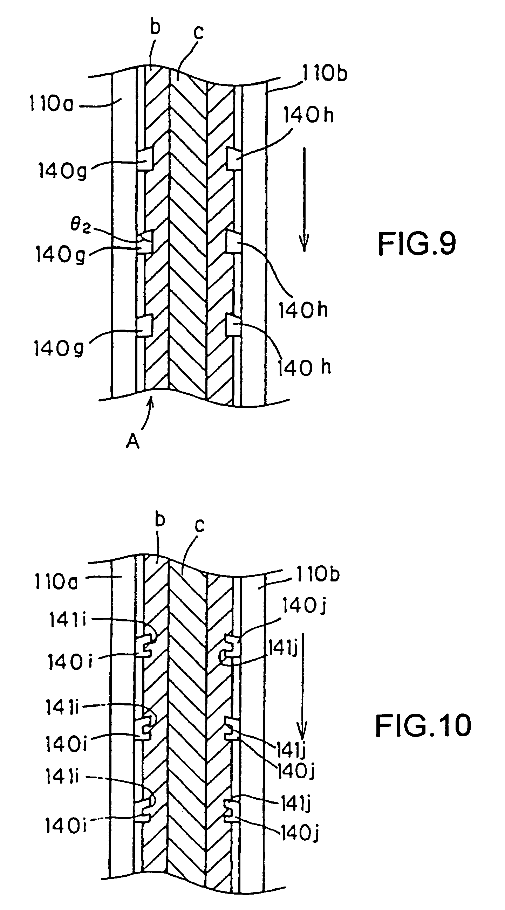

Fig. 9 shows another embodiment wherein the front face (facing the ferrule 60) of each of the stoppers 140g, 140h is tapered towards the front side (towards the ferrule 60) of the casing portion 10, as it extends towards the cable A.

Fig. 10 shows a further embodiment wherein the innermost opposing face of each of the stoppers 140i, 140j is provided with a concavity 141i, 141j in a perpendicular direction to the general plane of the cover 100. Likewise, the front face (facing the ferrule 60) of the stoppers 140i,140j may be tapered towards the front side (towards the ferrule 60) of the casing portion 10, as it extends towards the cable.

In these constructions, when a backward force (towards the orifices 12) is applied to the cable A, stoppers 140g, 140h, 140i, 140j are cut into the coating b, thereby retaining the cable A more forcefully.

Fig. 9 shows an optical connector having three pairs of stoppers 140g, 140h. Each stopper may have a width of 0.8 mm, a taper angle θ₂ of 90° for the front face (angle of the front face in respect to the axis of the cable A) and a slant angle θ₁ of 90° for the sharp edge. When the cable A is held under the above conditions, the cable shows a tensile strength above 60 N and an optical loss less than 0. 1 dB.

In the above-mentioned embodiments, the cable guide 14 is provided in the housing 2, whilst the guide plates 110a, 110b and the stoppers 140a, 140b are provided on the cover 100. Alternatively, the constructs in the housing and on the cover may be interchanged.

## Claims

1. An optical connector for fixing one or a plurality of optical-fiber cables (A), said cable comprising an optical-fiber core (c) and a coating (b) having a tangential direction, said connector comprising :
a) a housing (2) having a longitudinal direction along which said cables (A) are arranged and an elevational direction ;
b) a cover (100) having the same directions as defined above ; and
c) means for fixing said cable into said connector ;
**characterised in that** said fixing means comprise :
- a cable guide (14) for securely disposing each cable (A), said cable guide (14) being provided on one of either said housing (2) or said cover (100) and extending along said longitudinal direction ; **characterised by**
- a pair of guide plates (110a, 110b) provided on the other of either said housing (2) or said cover (100), said guide plates (110a, 110b) extending along said longitudinal and elevational directions and forming parallely opposing faces so as to flank said cable when said housing (2) and said cover (100) are mounted ; and,
- at least one stopper (140a, 140b, 140c, 140d) provided on said opposing face of each of said guide plates (110a, 110b) and extending along said elevational direction, said stopper (140a, 140b, 140c, 140d) having an open end with an innermost edge (142a, 142b), seen from said pair of guide plates (110a, 110b), which forms a cutting edge arranged to, when said housing (2) and said cover (100) are mounted, cut away part of said coating (b) of the cable (A) in said tangential direction thereof whereby said stopper (140a, 140b) securely holds said cable (A).

2. The optical connector according to claim 1, wherein said innermost edge (142c, 142d) has an angle of 50 to 90° with respect to the tangential direction of said cable coating (b).

3. The optical connector according to claim 1 or 2, wherein said at least one stopper (140a, 140b, 140c, 140d) on each of said guide plates (110a,11 10b) forms a plurality of pairs of stoppers (140e, 140f) facing each other at both sides of said optical-fiber cable (A) and each pair is provided along said longitudinal direction at a predetermined pitch.

4. The optical connector according to any one of claims 1 to 3, wherein said innermost edge (142a, 142b, 142c, 142d) of the stopper (140a, 140b, 140c, 140d) has a length of not more than 1 mm along said longitudinal direction.

5. The optical connector according to any one of claims 1 to 4, wherein said stopper (140a ~ 140f) has a substantially rectangular cross-section.

6. The optical connector according to any one of claims 1 to 5, wherein said stopper (140a ~140f) has an innermost face extending along said elevational direction, said innermost face being provided with a groove (141i, 141j) along said elevational direction.

7. The optical connector according to any one of claims 1 to 6, wherein said housing (2) has a front side and a rear side at each end of said longitudinal direction, said front side comprising one or a plurality of ferrules (60), and said rear side comprising a corresponding number of openings (12) for inserting said optical-fiber cable.

8. The optical connector according to any one of claims 5 to 7, wherein said stopper (140a ~ 140f) has a face facing said front side, said face being tapered towards said front side as it goes away from said guide plate (110a, 110b).

9. The optical connector according to any one of claims 1 to 8, wherein said cable guide (14) comprises a channel along said longitudinal direction.

## Patentansprüche

1. Optischer Verbinder zum Befestigen von einem oder einer Vielzahl von optischen Faserkabeln (A), wobei das Kabel umfasst einen optischen Faserkern (c) und eine Beschichtung (b) mit einer tangentialen Richtung, wobei der Verbinder umfasst:
a) ein Gehäuse (2) mit einer Längsrichtung entlang der die Kabel (A) angeordnet sind und einer Höhen- bzw. Aufwärtsrichtung;
b) eine Abdeckung (100) mit denselben wie vorstehend definierten Richtungen; und
c) Mittel zum Befestigen des Kabels in dem Verbinder;
**dadurch gekennzeichnet, dass** die Befestigungsmittel umfassen:
- eine Kabelführung (14) zum sicheren Anordnen von jedem Kabel (A), wobei die Kabelführung (14) auf einem von entweder dem Gehäuse (2) oder der Abdeckung (100) bereitgestellt ist und sich entlang der Längsrichtung erstreckt; **gekennzeichnet durch**
- ein Paar Führungsplatten (110a, 100b), bereitgestellt an bzw. auf dem anderen von entweder dem Gehäuse (2) oder der Abdeckung (100), wobei die Führungsplatten (110a, 110b) sich entlang der Längs- und Aufwärtsrichtung erstrecken und parallel gegenüberliegende bzw. entgegengesetzte Flächen bilden, sodass sie das Kabel flankieren, wenn das Gehäuse (2) und die Abdeckung (100) montiert werden; und
- zumindest einen Anschlag (140a, 140b, 140c, 140d), bereitgestellt an der gegenüber liegenden bzw. entgegengesetzten Fläche von jeder der Führungsplatten (110a, 110b) und sich entlang der Aufwärtsrichtung erstreckend, wobei der Anschlag (140a, 140b, 140c, 140d) ein offenes Ende mit einer innersten Kante bzw. Rand (142a, 142b) aufweist, und zwar beobachtet von dem Paar Führungsplatten (110a, 110b), die eine Schneidkante bilden, die so eingerichtet ist, dass wenn das Gehäuse (2) und die Abdeckung (100) montiert werden, ein Teil von der Beschichtung (b) von dem Kabel (A) in der tangentialen Richtung davon weg geschnitten wird, wodurch der Anschlag (140a, 140b) das Kabel (A) fest bzw. sicher hält.

2. Optischer Verbinder nach Anspruch 1, wobei die innerste Kante bzw. Rand (142c, 142d) einen Winkel von 50 bis 90° hinsichtlich der tangentialen Richtung der Kabelbeschichtung (b) aufweist.

3. Optischer Verbinder nach Anspruch 1 oder 2, wobei der zumindest eine Anschlag (140a, 140b, 140c, 140d) an jeder der Führungsplatten (110a, 110b) eine Vielzahl von Paaren von Anschlägen (140e, 140f) bildet, die an beiden Seiten von dem optischen Faserkabel (A) zueinander weisen und jedes Paar entlang der Längsrichtung bei einem vorbestimmten Abstand bereitgestellt ist.

4. Optischer Verbinder nach einem der Ansprüche 1 bis 3, wobei die innerste Kante (142a, 142b, 142c, 142d) von dem Anschlag (140a, 140b, 140c, 140d) eine Länge von nicht mehr als 1 mm entlang der Längsrichtung aufweist.

5. Optischer Verbinder nach einem der Ansprüche 1 bis 4, wobei der Anschlag (140a - 140f) einen im Wesentlichen rechteckigen Querschnitt aufweist.

6. Optischer Verbinder nach einem der Ansprüche 1 bis 5, wobei der Anschlag (140a - 140f) eine innerste Fläche aufweist, die sich entlang der Aufwärtsrichtung erstreckt, wobei die innerste Fläche mit einer Nut bzw. Rille(141i, 141j) entlang der Aufwärtsrichtung versehen ist.

7. Optischer Verbinder nach einem der Ansprüche 1 bis 6, wobei das Gehäuse (2) eine Vorderseite und eine Rückseite an jedem Ende der Längsrichtung aufweist, wobei die Vorderseite eine oder eine Vielzahl von Hülsen bzw. Faserhülsen bzw. Aderendhülsen (60) umfasst und die Rückseite eine entsprechende Anzahl an Öffnung (12) zum Einsetzen des optischen Faserkabels umfasst.

8. Optischer Verbinder nach einem der Ansprüche 5 bis 7, wobei der Anschlag (140a - 140f) eine Fläche aufweist, die zu der Vorderseite weist, wobei die Fläche sich zu der Vorderseite verjüngt, wenn sie von der Führungsplatte (110a, 110b) wegführt.

9. Optischer Verbinder nach einem der Ansprüche 1 bis 8, wobei die Kabelführung (14) einen Kanal entlang der Längsrichtung umfasst.

## Revendications

1. Connecteur optique destiné à fixer un ou une pluralité de câbles de fibre optique (A), ledit câble comprenant un noyau à fibre optique (c) et un revêtement (b) présentant une direction tangentielle, ledit connecteur comprenant:
a) un boîtier (2) présentant une direction longitudinale le long de laquelle lesdits câbles (A) sont agencés et une direction en élévation ;
b) un couvercle (100) présentant les mêmes directions que définies précédemment ; et
c) des moyens de fixation dudit câble sur ledit connecteur ;
**caractérisé en ce que** lesdits moyens de fixation comprennent:
un guide câble (14) destiné à positionner fermement chaque câble (A), ledit guide câble (14) étant formé sur l'un ou l'autre dudit boîtier (2) ou dudit couvercle (100) et s'étendant le long de ladite direction longitudinale ; **caractérisé par** :
une paire de plaque de guidage (110a à 110b) agencées sur l'autre côté de l'un ou l'autre dudit boîtier (2) ou dudit couvercle (100), lesdites plaques de guidage (110a, 110b) s'étendant le long desdites directions longitudinales et d'élévation et formant des faces opposées parallèles de manière à border ledit câble lorsque ledit boîtier (2) et ledit couvercle (100) sont montés ; et
au moins une butée (140a, 140b, 140c, 140d) agencée sur ladite face opposée de chacune desdites plaques de guidage (110a, 110b) et s'étendant le long de ladite direction d'élévation, ladite butée (140a, 140b, 140c, 140d) présentant une extrémité ouverte avec une arête la plus à l'intérieur (142a, 142b), vue à partir d'une paire de plaques de guidage (110a, 110b), qui forme une arête tranchante agencée de manière, lorsque ledit boîtier (2) et ledit couvercle (100) sont montés, à couper une partie dudit revêtement (b) du câble (A) dans ladite direction tangentielle de celui-ci, de telle sorte que ladite butée (140a, 140b) maintient fermement ledit câble (A).

2. Connecteur optique selon la revendication 1, dans lequel ladite arête la plus à l'intérieur (142c, 142d) présente un angle de 50 à 90° par rapport à la direction tangentielle dudit revêtement de câble (b).

3. Connecteur selon la revendication 1 ou 2, dans lequel ladite au moins butée ((140a, 140b, 140c, 140d) sur chacune desdites plaques de guidage (110a, 100b) forme une pluralité de paires de butées (140e, 140f) orientées l'une face à l'autre sur les deux côtés dudit câble à fibre optique (A) et chaque paire est agencée suivant ladite direction longitudinale avec un pas prédéterminé.

4. Connecteur optique selon l'une quelconque des revendications 1 à 3, dans lequel ladite arête la plus à l'intérieur (142a, 142b, 142c, 142d) de la butée (140a, 140b, 140c, 140d) présente une longueur non supérieure à 1 mm suivant ladite direction longitudinale.

5. Connecteur optique selon l'une quelconque des revendications 1 à 4, dans lequel ladite butée (140a à 140f) présente une section transversale sensiblement rectangulaire.

6. Connecteur optique selon l'une quelconque des revendications 1 à 5, dans lequel ladite butée (140a à 140f) présente une face la plus à l'intérieur s'étendant le long de ladite direction d'élévation, ladite face la plus à l'intérieur comportant une rainure (141i, 141j) suivant ladite direction d'élévation.

7. Connecteur optique selon l'une quelconque des revendications 1 à 6, dans lequel ledit boîtier (2) présente un côté avant et un côté arrière au niveau de chaque extrémité de ladite direction longitudinale, ledit côté avant comprenant une ou une pluralité de férules (60) et ledit côté arrière comprenant un nombre correspondant d'ouvertures (12) afin d'insérer ledit câble à fibre optique.

8. Connecteur optique selon l'une quelconque des revendications 5 à 7, dans lequel ladite butée (140a à 140f) présente une face orientée vers ledit côté avant, ladite face étant inclinée vers ledit côté avant lorsqu'il s'écarte de ladite plaque de guidage (110a, 110b).

9. Connecteur optique selon l'une quelconque des revendications 1 à 8, dans lequel ledit câble (14) comprend un canal suivant ladite direction longitudinale.
